# EUROPEAN PATENT APPLICATION

(11) **EP 2 679 784 A1**
(43) Date of publication of application: **01.01.2014**
(21) Application number: 13172359.5
(22) Date of filing: 17.06.2013
(51) Int. Cl.: F02C 7/236, F23L 7/00

(54) **Hot water injection for turbomachine**

(30) Priority: 26.06.2012 US 201213533750
(71) Applicant: General Electric Company, Schenectady, New York 12345 (US)
(72) Inventor: Rajan, Sudhahar, 560066 Bangalore, Karnataka (IN); John, Joseph, 560066 Banagalore, Karnataka (IN); Thiyagarajan, Manikandan, 560066 Banagalore, Karnataka (IN)
(74) Representative: Cleary, Fidelma

(57) **Abstract**

A turbomachine (10) is provided and includes a combustor (21) in which a first quantity of compressed air (250) and fuel (251) are combustible and into which heated water is injectible. The water is provided to the combustor (21) subsequent to being used to cool a second quantity of compressed air (252), and prior to the second quantity of compressed air (252) being used to atomize the fuel (251).

## Description

### BACKGROUND OF THE INVENTION

The subject matter disclosed herein relates to turbomachines and, more particularly, to turbomachines in which water is used to cool atomizing air and for emission control and improved efficiency.

For gas turbine engines operating in liquid fuel modes, atomizing air can be drawn from compressor discharge air and used for atomizing the liquid fuel prior to combustion as doing so can facilitate proper combustion of the liquid fuel. The atomizing air from the compressor discharge air is initially provided at very high temperatures of about 700° F and, thus, has to be cooled to about 225° F before it can be used to atomize the liquid fuel. The cooling of the atomizing air is currently achieved using an atomizing air trim cooler, which uses cooling water from, for example, a cooling tower.

When gas turbine engines operate on liquid fuel, they often use water injection for emission control. Water is injected into the combustor at high pressure, but at a room temperature. The injected water gets converted to steam in the combustor and the latent heat for phase change is taken from combustion gas and hence affects the gas turbine engine performance.

### BRIEF DESCRIPTION OF THE INVENTION

According to one aspect of the invention, a turbomachine is provided and includes a combustor in which a first compressed air is combustible along with fuel and which is receptive of water. The water is provided to the combustor subsequent to the water being used to cool a second compressed air, and the water is used to cool the second compressed air prior to the second compressed air being used to atomize the fuel.

According to another aspect of the invention, a turbomachine is provided and includes a combustor in which compressed air and fuel are combustible to produce a working fluid and into which water is injectable, an atomizing air compressor, which is configured to atomize the fuel, a supply circuit configured to supply the atomizing air compressor with compressed air for use in fuel atomization and a cooling circuit sequentially coupled to the supply circuit and the combustor. The cooling circuit is configured to cool the compressed air to be supplied to the atomizing air compressor with water prior to the fuel atomization and to subsequently provide the water for injection into the combustor.

According to yet another aspect of the invention, a turbomachine is provided and includes a combustor in which a first quantity of compressed air and fuel are combustible to produce a working fluid and into which heated water is injectable for emission control and improved efficiency, nozzles, which are configured to inject atomized fuel into the combustor, a supply circuit configured to supply the atomizing air compressor with a second quantity of compressed air for use in fuel atomization and a cooling circuit sequentially coupled to the supply circuit and the combustor. The cooling circuit is configured to cool the second quantity of compressed air with water prior to the fuel atomization and to subsequently provide the water as the heated water to the combustor for the emission control and the improved efficiency.

These and other advantages and features will become more apparent from the following description taken in conjunction with the drawings.

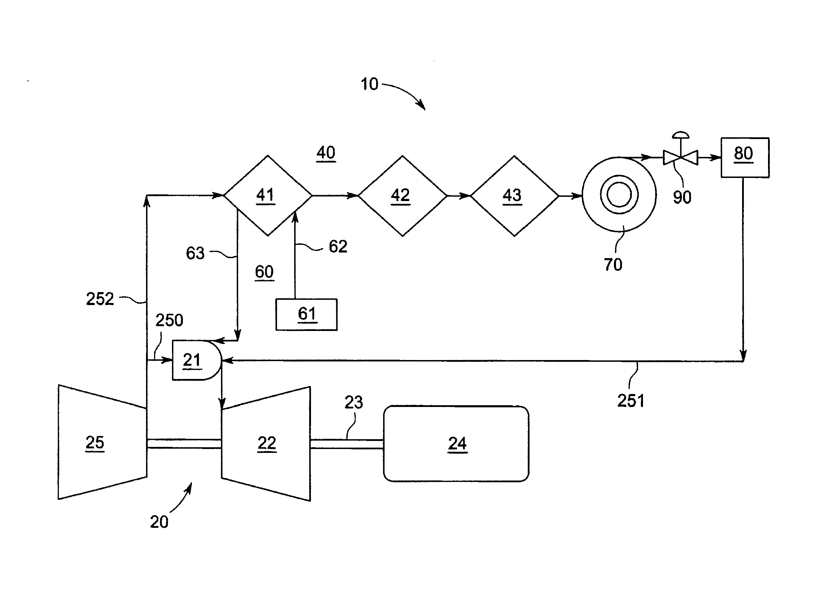

### BRIEF DESCRIPTION OF THE DRAWING

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:

The sole figure is a schematic diagram of a turbomachine in accordance with embodiments of the invention.

The detailed description explains embodiments of the invention, together with advantages and features, by way of example with reference to the drawings.

### DETAILED DESCRIPTION OF THE INVENTION

With reference to the sole figure, a turbomachine 10 is provided. The turbomachine 10 includes a gas turbine engine 20, a supply circuit 40 and a cooling circuit 60. The gas turbine engine 20 includes a combustor 21, a turbine 22, a rotatable shaft 23, a generator 24 and a compressor 25. The combustor 21 is provided as a vessel having an interior in which at least one combustion zone is defined and which is receptive of injectable water. Within the combustion zone, a first quantity of compressed air 250 and liquid fuel 251 (in a liquid fuel mode of the gas turbine engine 20) are combustible to produce a working fluid of high temperatures and pressures. In addition, as will be discussed below, heated water may be injected into the combustor 21 for emission control and improved efficiency.

The turbine 22 is disposed downstream from the combustor 21 and is receptive of the working fluid from the combustor 21. The turbine 22 includes various stages of aerodynamic elements that are configured to aerodynamically interact with the working fluid to thereby derive mechanical energy from the working fluid and in turn to rotate about a rotor. This rotation drives rotation of the rotatable shaft 23. The generator 24 is disposed on the rotatable shaft 23 and is configured to generate electricity from the rotation of the rotatable shaft 23. The compressor 25 is similarly disposed on the rotatable shaft 23 and is configured to compress inlet air by way of the rotation of the rotatable shaft 23 to thereby produce the first quantity of compressed air 250 along with a second quantity of compressed air 252.

The first quantity of compressed air 250 and the second quantity of compressed air 252 are drawn from the compressor 25. In accordance with embodiments, the first and second quantities of compressed air 250 and 252 may be drawn from one or more late stages of the compressor 25. The first and second quantities of compressed air 250 and 252 need not be drawn form the same stage of the compressor 25.

The turbomachine 10 further includes an atomizing air compressor 70 and fuel nozzles 80. The fuel nozzles 80 are configured to inject the liquid fuel 251 into the combustor 21 as atomized liquid fuel 251 so that proper combustion of the liquid fuel can be facilitated. The atomizing air compressor 70 is configured to employ the second quantity of compressed air 252 in atomization operations executed with respect to the liquid fuel 251. The turbomachine 10 may further include a control valve 90. The control valve 90 is operably disposed between the fuel nozzles 80 and the atomizing air compressor 70 and is operable to control an amount or degree of the fuel atomization by modulating respective amounts of the liquid fuel 251 to be atomized and the second quantity of compressed air 252.

The supply circuit 40 is configured to supply the atomizing air compressor 70 with the second quantity of compressed air 252 for use in the liquid fuel 251 atomization operations. In accordance with embodiments, the supply circuit 40 includes an atomizing air trim cooler 41. Within the atomizing air trim cooler 41, the second quantity of compressed air 252 is cooled by water provided thereto via the cooling circuit 60. Thus, the atomizing air trim cooler 41 may comprise any suitable type of heat exchanger such as a shell and tube heat exchanger or a plate fin heat exchanger. The supply circuit 40 further includes a moisture separator 42 and a filter 43, which are sequentially interposed between the atomizing air trim cooler 41 and the atomizing air compressor 70.

The cooling circuit 60 is sequentially coupled to the supply circuit 40 and to the combustor 21. The cooling circuit 60 is configured to cool the second quantity of compressed air 252 with the water prior to the use of the second quantity of compressed air 252 in the liquid fuel 251 atomization operations. The cooling circuit 60 is further configured to subsequently provide the water as the heated water to the combustor 21 for the emission control and improved efficiency.

In accordance with embodiments, the water used by the cooling circuit 60 includes cooling tower water and may be provided to the atomizing air trim cooler 41 at or near ambient temperature. In accordance with further embodiments, the cooling circuit 60 includes a water injection skid 61, which is configured to inject the water into the atomizing air trim cooler 41 of the supply circuit 40 via conduit 62 and a second conduit 63. The second conduit 63 is coupled at a first end thereof to the atomizing air trim cooler 41 and at a second end thereof to the combustor 21. Thus, the second conduit 63 is configured to transport the water as the heated water from the atomizing air trim cooler 41 to the combustor 21.

With the configuration described above and, in accordance with exemplary embodiments, the water may be provided to the atomizing air trim cooler 41 at about 70° F. As such, the second quantity of the compressed air 252 may be cooled from about 700° F to about 225° F. Concurrently, the water may be heated to about 70° F prior to being provided to the combustor 21. Thus, the energy required for the heating of the water from about 70° F to about 300° F is provided from the second quantity of compressed air 252 and not from the first quantity of compressed air 250 or the working fluid produced in the combustor 21.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A turbomachine, comprising:
   a combustor in which a first compressed air is combustible along with fuel and which is receptive of water,
   the water being provided to the combustor subsequent to the water being used to cool a second compressed air, and
   the water being used to cool the second compressed air prior to the second compressed air being used to atomize the fuel.
2. The turbomachine according to clause 1, wherein the water is provided form a cooling tower at ambient temperature.
3. The turbomachine according to clause 1 or clause 2, further comprising an atomizing air cooler in which the second compressed air is cooled by the water.
4. The turbomachine according to any preceding clause, further comprising an atomizing air compressor disposed downstream from the atomizing air cooler in which the second compressed air atomizes the fuel to be combusted.
5. A turbomachine, comprising:
   a combustor in which a first quantity of compressed air and fuel are combustible to produce a working fluid and into which heated water is injectable for emission control and improved efficiency;
   nozzles, which are configured to inject atomized fuel into the combustor;
   a supply circuit configured to supply the atomizing air compressor with a second quantity of compressed air for use in fuel atomization; and
   a cooling circuit sequentially coupled to the supply circuit and the combustor, the cooling circuit being configured to cool the second quantity of compressed air with water prior to the fuel atomization and to subsequently provide the water as the heated water to the combustor for the emission control and the improved efficiency.
6. The turbomachine according to any preceding clause, further comprising:
   a turbine in which mechanical energy is derived from the working fluid produced in the combustor to drive rotation of a shaft;
   a generator disposed on the shaft to generate electricity from the rotation of the shaft; and
   a compressor disposed on the shaft to compress inlet air by way of the rotation of the shaft,
   wherein the first and second quantities of compressed air are drawn from the compressor.
7. The turbomachine according to any preceding clause, wherein the first and second quantities of compressed air are drawn from a late stage of the compressor.
8. The turbomachine according to any preceding clause, further comprising a control valve, which is operably disposed between the nozzles and the atomizing air compressor, and which is operable to control an amount of the fuel atomization.
9. The turbomachine according to any preceding clause, wherein the supply circuit comprises:
   an atomizing air cooler in which the second quantity of compressed air is cooled by the water; and
   a moisture separator and a filter sequentially interposed between the atomizing air cooler and the atomizing air compressor.
10. The turbomachine according to any preceding clause, wherein the water comprises cooling tower water.
11. The turbomachine according to any preceding clause, wherein the water is provided at ambient temperature.
12. The turbomachine according to any preceding clause, wherein the cooling circuit comprises a water injection skid to inject the water into the supply circuit.

## Claims

1. A turbomachine, comprising:
a combustor (21) in which compressed air and fuel are combustible to produce a working fluid and into which water is injectable;
an atomizing air compressor (70), which is configured to atomize the fuel;
a supply circuit (40) configured to supply the atomizing air compressor (70) with compressed air for use in fuel atomization; and
a cooling circuit (60) sequentially coupled to the supply circuit (40) and the combustor (21), the cooling circuit (60) being configured to cool the compressed air to be supplied to the atomizing air compressor (70) with water prior to the fuel atomization and to subsequently provide the water for injection into the combustor (21).

2. The turbomachine according to claim 1, further comprising:
a turbine (22) in which mechanical energy is derived from the working fluid produced in the combustor (21) to drive rotation of a shaft (23);
a generator (24) disposed on the shaft (23) to generate electricity from the rotation of the shaft (23); and
a compressor (25) disposed on the shaft (23) to compress inlet air by way of the rotation of the shaft (23),
wherein the compressed air is drawn from the compressor (25).

3. The turbomachine according to claim 2, wherein the compressed air is drawn from a late stage of the compressor (25).

4. The turbomachine according to any of claims 1 to 3, further comprising a control valve (90), which is operable to control an amount of the fuel atomization.

5. The turbomachine according to any of claims 1 to 4, wherein the supply circuit (40) comprises:
an atomizing air cooler (41) in which the compressed air is cooled by the water; and
a moisture separator (42) and a filter (43) sequentially interposed between the atomizing air cooler (41) and the atomizing air compressor (70).

6. The turbomachine according to any of claims 1 to 5, wherein the water comprises cooling tower water.

7. The turbomachine according to any of claims 1 to 6, wherein the water is provided at ambient temperature.

8. The turbomachine according to any of claims 1 to 7, wherein the cooling circuit (60) comprises a water injection skid (61) to inject the water into the supply circuit (40).
